(19) Europäisches Patentamt

European Patent Office

Office européen des brevets

(11) **EP 3 807 669 B1**

(12) **FASCICULE DE BREVET EUROPEEN**

(45) Date de publication et mention de la délivrance du brevet:
**26.07.2023 Bulletin 2023/30**

(21) Numéro de dépôt: **19737854.0**

(22) Date de dépôt: **07.06.2019**

(51) Classification Internationale des Brevets (IPC):
***G01S 3/802*** *(2006.01)*

(52) Classification Coopérative des Brevets (CPC):
**G01S 3/8006**

(86) Numéro de dépôt international:
**PCT/FR2019/051377**

(87) Numéro de publication internationale:
**WO 2019/239043 (19.12.2019 Gazette 2019/51)**

(54) **LOCALISATION DE SOURCES SONORES DANS UN ENVIRONNEMENT ACOUSTIQUE DONNÉ**

ORTUNG VON SCHALLQUELLEN IN EINER BESTIMMTEN AKUSTISCHEN UMGEBUNG

LOCATION OF SOUND SOURCES IN A GIVEN ACOUSTIC ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2018 FR 1855188**

(43) Date de publication de la demande:
**21.04.2021 Bulletin 2021/16**

(73) Titulaire: **Orange**
**92130 Issy-les-Moulineaux (FR)**

(72) Inventeurs:
• **GUERIN, Alexandre**
 **92326 CHÂTILLON CEDEX (FR)**
• **KITIC, Srdan**
 **92326 CHÂTILLON CEDEX (FR)**
• **LEFORT, Arnaud**
 **92326 CHÂTILLON CEDEX (FR)**

(74) Mandataire: **Plasseraud IP**
**66, rue de la Chaussée d'Antin**
**75440 Paris Cedex 09 (FR)**

(56) Documents cités:
**EP-A2- 0 795 851     US-A1- 2012 195 436**

**Description**

La présente invention se rapporte au domaine du traitement du signal audio ou acoustique.

Plus particulièrement, elle a trait à la localisation de sources sonores simultanées en au moins deux dimensions (azimuth/élévation), ou « cartographie sonore » ci-après.

Une telle localisation peut être réalisée à partir d'une prise de son multicanale, qui peut se présenter sous une forme de grille plane, ou sphérique.

Des applications de la cartographie de scènes acoustiques sont multiples.

On peut citer par exemple des assistants vocaux domestiques où la localisation du locuteur est essentielle pour nettoyer le signal de commande vocale en tirant parti des capacités de focalisation de l'antenne. Une localisation simultanée de(s) source(s) de bruit permettrait encore d'améliorer le traitement de suppression des bruits en utilisant des filtres spatiaux-fréquentiels adaptés.

Pour des contenus de réalité virtuelle (par exemple de type 360/VR), la prise de son privilégiée pour la création de tels contenus est effectuée selon la technique dite « ambiophonique » ou « ambisonic » en anglais. Elle permet d'avoir une représentation 3D du champ sonore et ainsi de garantir une cohérence audio-visuelle lors des mouvements de l'utilisateur. La création de ces contenus nécessite un travail d'édition, qui se base sur la connaissance de la position des sources dans le contenu afin de renforcer/atténuer ces sources, les déplacer, ou autres.

Par ailleurs, des codeurs audio de nouvelle génération doivent supporter des données au format ambiophonique (sphérique 3D), appelé par anglicisme ci-après format « ambisonique ». De même, le futur codée EVS du 3GPP IVAS (pour Immersive Voice and Audio Services) doit être capable de compresser des données au format ambisonique. La cartographie temps-réel peut servir à compresser ces scènes nativement 3D de manière plus efficace ou plus fidèle, par exemple en se focalisant sur les sources d'intérêt.

En visioconférence par ailleurs encore, une antenne de microphones est couplée avec une ou plusieurs caméras grand-angle. L'antenne de microphones peut servir à capter spatialement la scène sonore en vue de la restituer sur un site distant par un jeu de haut-parleurs. L'antenne de microphones peut également servir à piloter un zoom vidéo de la caméra sur le locuteur en détectant et localisant la source sonore active. Il est donc recherché une détection quasi-instantanée, robuste aux conditions acoustiques et un suivi du locuteur dans l'espace, ce qui permettrait de le suivre visuellement. D'autre part, la détection de plusieurs sources simultanées permet aussi d'adapter le comportement en fonction de la complexité de la scène sonore, comme activer une vue grand-angle si plusieurs sources sont actives simultanément. Enfin, la localisation de la source permet de calculer des filtres spatiaux (par une technique connue de « beamforming » par exemple) pour nettoyer la source utile en réduisant les bruits environnants.

On considère donc, plus généralement, une scène sonore composée de $I$ sources, qui émettent des signaux $s_i(t)$, $1 \leq i \leq I$. La localisation de sources sonores est effectuée à l'aide d'une antenne composée de C capteurs (des microphones typiquement), dont les signaux captés $x_j(t)$, $1 \leq j \leq C$ sont donnés par :

$$x_j(t) = \sum_{i=1}^{I} \sum_{\tau \geq 0} a_{ij}(\tau) s_i(t - \tau)$$

où $a_{ij}(\tau)$ est, par définition, la réponse impulsionnelle liant la source $i$ au capteur j, représentative par exemple des réflexions générées par l'acoustique de l'environnement sonore.

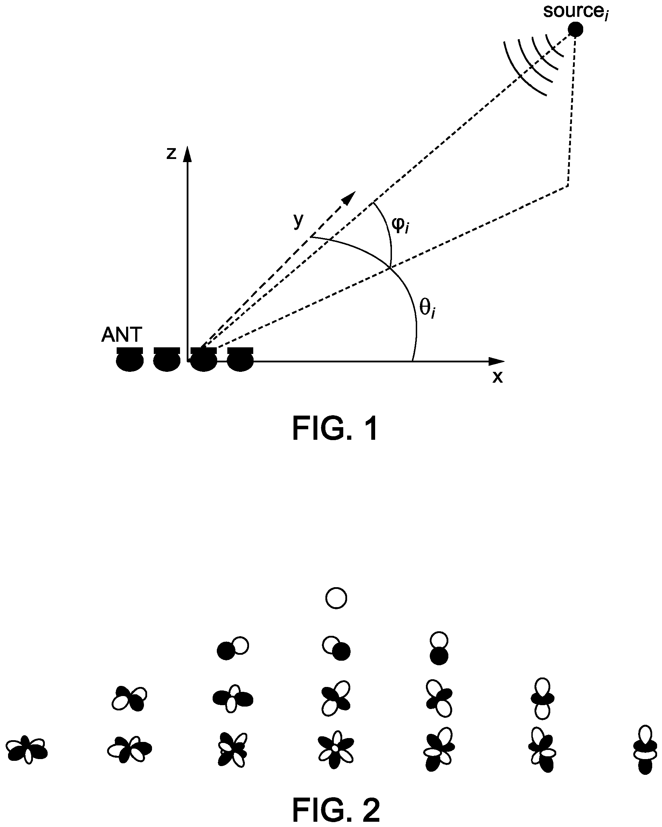

Si l'on ne s'intéresse pas à la distance d'une source à l'antenne, chaque source peut être repérée par ses coordonnées polaires (azimut, élévation) relativement à l'antenne, ces coordonnées étant notées ($\theta_i$, $\varphi_i$), $1 \leq i \leq I$, comme illustré sur la figure 1, sur laquelle l'antenne de microphones est référencée ANT.

Les méthodes de localisation se basent sur des prises de son multicanale, sous forme d'antenne composée de plusieurs microphones. Suivant les applications, les antennes peuvent être linéaires (localisation dans un demi-plan uniquement), planes (localisation dans un demi-espace), ou sphériques.

Une première famille de méthodes de localisation exploite la différence de temps d'arrivée inter-capteurs (ou « TDOA » pour Time Différence Of Arrival) pour en déduire la direction d'arrivée (ou « DOA » pour Direction Of Arrivai) du front d'onde principal, direction directement reliée à la position de la source dominante sur la fenêtre temporelle d'observation choisie.

Ces TDOA sont classiquement estimées par calcul d'intercorrélation inter-capteurs (méthode dite « GCC » pour Generalized Cross-Correlation).

Limitée à la localisation d'une seule source, la méthode GCC a été étendue à la localisation simultanée de plusieurs sources en opérant en sous-bandes fréquentielles, exploitant la parcimonie fréquentielle des sources, et en faisant donc l'hypothèse qu'une source est prépondérante dans chaque sous-bande.

La technique dite « MUSIC » (pour Multiple Signal Classification) permet, entre autres, d'identifier simultanément la direction d'arrivée de différentes sources, sous réserve que le nombre de sources est inférieur au nombre de capteurs. En faisant l'hypothèse que le nombre de sources peut être estimé *a priori,* la méthode MUSIC procède à une recherche exhaustive des directions d'arrivée en minimisant un critère de corrélation avec le sous-espace vectoriel du bruit.

D'autres approches telles que « SRP-Phat » (pour Steered-Response Power-Phase Transform) exploitent les capacités de formation de voie de l'antenne de captation pour estimer, par une recherche exhaustive dans toutes les directions de l'espace, celles desquelles provient le maximum d'énergie, directions qui correspondent généralement aux positions des sources.

Enfin, des méthodes comme « DUET » (pour Degenerate Unmixing Estimation Technique), ou encore DEMIX (Direction Estimation of Mixing matriX), calculent un critère physique de localisation sur des trames court-terme. Ce critère est généralement estimé par sous-bandes après application d'une transformée de Fourier à court-terme ou FFT (Fast Fourier Transform), ce qui permet d'exploiter la parcimonie spectrale des sources sonores et donc de faire l'hypothèse qu'une seule source est présente dans chaque sous-bande.

Les indices de plusieurs trames consécutives sont rassemblés, puis quantifiés sur une grille de l'espace pour produire un histogramme représentant une carte d'activation pour chaque direction dans l'espace. Cet histogramme est ensuite traité par une technique de regroupement ou « clustering », par exemple à l'aide d'algorithmes de type K-means, les centres des clusters représentant la position de sources.

Les principales limites de l'état de l'art sont liées au compromis entre le coût de calcul et la robustesse à la réverbération, qui les rend difficilement exploitables en temps-réel dans des conditions acoustiques réelles.

Par construction même, la méthode GCC est restreinte à l'identification de la DOA (direction d'arrivée du son) d'une seule source à la fois. D'autre part, elle est très sensible aux conditions acoustiques. En effet, la réverbération vient fortement perturber l'estimation du retard entre capteurs. La méthode requiert une taille de fenêtre importante (de l'ordre de la seconde) pour estimer l'inter-corrélation entre les capteurs de l'antenne. L'extension au cas multi-sources simultané par une décomposition en sous-bandes nécessite une résolution spectrale raisonnable pour que l'hypothèse de parcimonie soit vérifiée (en pratique inférieure à 100 Hz).

Cela revient en pratique à travailler sur des fenêtres de plusieurs secondes, ce qui n'est pas compatible avec des sources mobiles (même faiblement) d'une part, ni avec les applications qui nécessitent une détection quasi-instantanée de sources intermittentes comme la parole.

En théorie, les méthodes de type SRP sont capables d'identifier plusieurs sources simultanées. Si les performances sont acceptables en milieu anéchoïque, il en est tout autrement en milieu réverbérant. En effet, les réflexions et la réverbération sont vues comme autant de sources de bruit quasi-isotropiques. Ainsi, même dans des milieux faiblement réverbérant, la carte d'énergie générée par les méthodes de type SRP est « pleine » et permet difficilement d'identifier les zones correspondant aux sources émettrices. Du fait de la réverbération, la résolution angulaire de ces méthodes est faible et la détection de sources simultanées n'est possible que si l'écart angulaire entre les sources est important, et ce même avec des antennes de résolution spatiale élevée.

Les méthodes basées sur des histogrammes de critères de localisation en sous-bandes comme DUET ou DEMIX s'avèrent quant à elles relativement complexes du fait du traitement de regroupement ou « clustering », surtout en deux ou trois dimensions. Ce coût de calcul est amplifié par le fait que le nombre de sources est inconnu. En pratique, il est nécessaire d'effectuer le clustering pour différentes hypothèses sur le nombre de sources pour décider *a posteriori* de la configuration la plus probable, d'où l'augmentation de la complexité de l'algorithme.

EP 0 795 851 A2 divulgue un procédé et une système de reconnaissance de la parole en utilisant un réseau de microphones .

US 2012/195436 A1 divulgue un procédé pour localiser des sources sonores en utilisant une différence de temps.

Il est recherché toutefois une technique rapide et de faible complexité.

La présente invention vient améliorer cette situation.

Elle propose à cet effet un procédé de traitement de signaux acoustiques pour une détection d'une ou plusieurs sources sonores dans une scène sonore, le procédé comprenant :

- obtenir une pluralité de signaux représentatifs de la scène sonore, captés par une pluralité de microphones de positions prédéfinies,
- à partir des signaux captés par les microphones et des positions des microphones, appliquer une quantification de mesures directionnelles d'intensité sonore et établir une carte d'activité acoustique correspondante dans un espace de localisation des sources sonores, ledit espace étant de dimension N.

En particulier, le procédé comporte en outre :

- construire au moins une base vectorielle de dimension inférieure à N,

- projeter la carte d'activité acoustique selon au moins un axe de la base vectorielle, et
- rechercher au moins un pic local d'activité acoustique dans la projection de la carte, un pic local identifié correspondant à la présence d'une source sonore dans la scène.

Ainsi, l'invention permet de réduire, du fait de la projection précitée, la dimension N de la carte d'activité acoustique à un corpus d'étude de dimension réduite N-P, ce qui permet avantageusement de réduire la complexité du traitement et économiser les ressources informatiques nécessaires au traitement.

On peut utiliser par exemple les techniques DUET ou DEMIX décrites précédemment pour obtenir les histogrammes permettant de construire la carte d'activité acoustique précitée, moyennant quelques améliorations décrites ci-après pour augmenter la robustesse du traitement pour la détection, voire la localisation de sources.

Déjà, typiquement, la recherche de pic local d'activité acoustique dans la projection de la carte peut comporter le traitement de regroupement par une technique de clustering comme décrit précédemment, mais uniquement sur la ou les projection(s) de la carte, et non pas sur l'ensemble de la carte complète, et l'identification ensuite des centres de clusters comme positions possibles de sources.

Dans une forme de réalisation, les signaux sont obtenus sur des trames successives de durée correspondant chacune à une période d'observation prédéterminée, et l'établissement de la carte d'activité acoustique comporte :

- rassembler des indices de plusieurs trames consécutives, et
- quantifier lesdits indices sur un maillage de l'espace de dimension N.

Une telle réalisation, sur plusieurs trames successives, permet de détecter une source active, généralement sur plusieurs périodes d'observation (ou durées de trame).

On peut choisir par exemple une durée d'observation comprise entre 10 et 50 ms.

Outre la détection de source(s), il est possible de déterminer la direction d'arrivée de la source comme suit :

- à partir d'au moins une coordonnée du pic local (ou plusieurs coordonnées du pic local si la dimension de la base vectorielle est supérieure à 1), on estime dans la base vectorielle précitée au moins une première direction d'arrivée du son issu de la source sonore correspondant à ce pic local (« première » ici, dans le sens de « grossière »).

Comme on le verra plus loin avec l'exemple d'une représentation ambisonique des signaux initialement captés par les microphones, il est possible d'effectuer plusieurs projections de la carte sur autant de bases vectorielles. Dans l'exemple illustré plus loin, ces bases peuvent être de dimension 1 (angle d'azimut ou angle d'élévation). On explique plus loin aussi pourquoi la projection sur la base des angles d'azimut est plus fiable, dans un environnement acoustique tel qu'une salle, que la projection sur la base des angles d'élévation (du fait des réverbérations acoustiques sur le sol et le plafond).

Ainsi, dans ce cas notamment, on peut se fonder sur la recherche de pic local dans la projection de la carte sur une base vectorielle particulière (de dimension N-P), pour une première localisation grossière de la source, puis rechercher plus finement les sources dans la carte acoustique complète (de dimension N) dans une région correspondant à cette première localisation grossière.

Ainsi, le procédé peut comporter en outre :

- à partir de la coordonnée du pic local dans la base vectorielle, affiner l'estimation de la direction d'arrivée du son en traitant la carte d'activité acoustique dans un secteur seulement de l'espace de dimension N, incluant ladite première direction d'arrivée.

Dans une forme de réalisation, le procédé comporte l'application d'une décomposition en sous-bandes de fréquences, aux signaux captés par les microphones.

Une telle réalisation permet déjà d'avoir plus de données et en particulier de profiter de la parcimonie des sources pour (espérer) n'avoir qu'une seule source dans chaque bande (avec ainsi une information de direction d'arrivée de son des sources moins bruitée).

Dans une forme de réalisation, on applique une pondération à la quantification des mesures directionnelles d'intensité sonore, de façon proportionnelle à une énergie acoustique estimée pour chaque mesure à quantifier.

Une telle réalisation permet de privilégier les bandes de fréquences de forte énergie et/ou les durées d'observation successives (donc les trames), qui présentent une forte énergie, ce qui illustre la présence d'une source.

Par exemple, on peut estimer une énergie acoustique par trame et appliquer une pondération avec un poids plus élevé à la quantification des mesures directionnelles d'intensité sonore issues des trames ayant le plus d'énergie. On effectue alors dans ce cas une « pondération dans le temps ».

En variante ou en complément, on peut estimer une énergie par sous-bande pour identifier des sous-bandes ayant le plus d'énergie acoustique et appliquer une pondération avec un poids plus élevé à la quantification des mesures directionnelles d'intensité sonore ayant une plus grande représentation dans les sous-bandes ayant le plus d'énergie. On effectue alors dans ce cas une « pondération dans les fréquences ».

Comme indiqué précédemment, les microphones peuvent être agencés pour capter des signaux sonores définis dans une base d'harmoniques sphériques en représentation ambisonique. On construit alors au moins une base vectorielle de dimension un, parmi :

-  une première base définissant des valeurs d'angle d'azimut de direction d'arrivée du son, et comportant un axe d'angles d'azimut sur lequel est projetée la carte d'activité acoustique, et
-  une deuxième base définissant des valeurs d'angle d'élévation de direction d'arrivée du son, et comportant un axe d'angles d'élévation sur lequel est projetée la carte d'activité acoustique.

Une telle réalisation permet d'avoir déjà une détection robuste, en particulier en azimut comme présenté dans les exemples plus loin. En particulier, comme présenté dans les exemples de réalisation ci-après, l'ordre de la représentation ambisonique n'a pas besoin d'être élevé pour mettre en oeuvre une telle réalisation.

En particulier, la représentation ambisonique peut être d'ordre un (ou plus), et à l'ordre 1 les angles d'azimut et d'élévation sont respectivement définis en fonction des quatre composantes ambisoniques d'ordre 1 : W, X, Y, Z, comme suit :

$$
\begin{cases}
\theta = & \arctan\left(\dfrac{f(WY^*)}{f(WX^*)}\right) \\[2ex]
\varphi = & \arctan\left(\dfrac{g(WZ^*)}{\sqrt[2]{\|g(WX^*)\|^2 + \|g(WY^*)\|^2}}\right)
\end{cases}
\tag{5}
$$

$f$ et $g$ sont ici des fonctions possibles parmi l'identité, l'espérance (statistique), la partie réelle d'une grandeur complexe, ou une combinaison de tout ou partie de ces fonctions.

Typiquement, dans le cas de composantes dans le domaine temporel, on a $f(x) = E\{x\}$ : l'espérance E est calculée, par hypothèse d'ergodicité, sur des échantillons temporels de la variable x qui représente alors les échantillons de la trame considérée.

Dans le cas de composantes complexes issus d'une transformée de Fourier, on a $f(x) = Re\{x\}$ : les échantillons x, pour une fréquence donnée, sont alors issus de différentes trames et on leur applique l'opérateur « partie réelle » afin d'estimer la partie active du vecteur intensité qui porte l'information de propagation du champ sonore à la fréquence considérée.

Bien entendu, on peut en outre combiner les deux fonctions d'espérance et partie réelle, au besoin.

En outre les fonctions $f$ et $g$ pour les représentations respectivement dans les bases d'angle d'azimut et d'angle d'élévation ci-dessus peuvent être identiques ou différentes. Par exemple, la fonction $f$ peut être la partie réelle $Re\{\}$ sur des échantillons complexes issus d'une transformée de Fourier, tandis que la fonction g pourra être la combinaison $E\{Re\{\}\}$, où l'espérance est prise sur différentes trames pour réduire la variance des observations qui peuvent s'avérer bruitées, notamment du fait des réflexions sur le sol et le plafond.

Pour éviter d'accorder trop d'importance aux réverbérations et aux champs diffus correspondant, on peut en outre estimer un critère de planéarité de l'onde sonore issue d'une source en fonction des composantes ambisoniques X, Y, Z et W, comme suit :

$$
c_{op} = \frac{f(\|X\|^2) + f(\|Y\|^2) + f(\|Z\|^2)}{3f(\|W\|^2)}
$$

Où $f$ est une fonction du type défini précédemment.

On peut alors appliquer, en outre, une pondération à la quantification des mesures directionnelles d'intensité sonore, de façon proportionnelle au critère de planéarité $c_{op}$ pour chaque mesure à quantifier.

On peut prévoir en outre l'application d'un filtre fréquentiel passe-bas à la projection de la carte d'activité acoustique.

En effet, comme les projections de la carte sont généralement bruitées en présence de réverbération, on évite ainsi une détection erronée de multiples sources par exemple.

Comme les exemples de réalisation ont pu montrer que la détection suivant l'angle d'azimut était plus robuste que suivant l'angle d'élévation, dans une forme de réalisation, l'estimation de la direction d'arrivée du son peut être affinée à partir de la coordonnée du pic local relevé dans la première base définissant des valeurs d'angle d'azimut (et on recherche ensuite une position fine de la source dans un secteur autour de la coordonnée d'azimut où la projection de la carte présente un pic local).

La présente invention vise aussi un programme informatique comportant des instructions pour la mise en oeuvre du procédé ci-avant, lorsque ces instructions sont exécutées par un processeur.

Elle vise aussi un dispositif comportant :

- une interface d'entrée pour recevoir des signaux captés par des microphones de positions prédéterminées,
- une unité de traitement pour la mise en oeuvre du procédé ci-avant, et une interface de sortie pour délivrer au moins un signal de détection de source.

D'autres avantages et caractéristiques apparaitront à la lecture de la description détaillée ci-après d'exemples de réalisation non limitatifs, et à l'examen des dessins annexés sur lesquels :

- La figure 1 illustre les positions relatives d'une source et d'une antenne de microphones, et la notation des coordonnées associés (en particulier d'azimut et d'élévation) ;
- La figure 2 illustre les fonctions harmoniques sphériques d'ordre 0 (première ligne en haut : la boule) jusqu'à l'ordre 3 ici (dernière ligne en bas), avec en clair les valeurs positives et en sombre les valeurs négatives ;
- La figure 3 représente la carte d'activité acoustique illustrant les directions d'arrivées (0(n,f), $\varphi$(n,f)) dans le cas ici de deux sources aux positions (0,0) et (90,10) pour deux acoustiques différentes (taux de réverbération TR60 de durée 0,375 et 0,7 s) ;
- La figure 4 illustre :

  o En haut à gauche : la carte projetée en 2D dans la base vectorielle h($\theta$_l,$\varphi$_p ), (azimut en abscisses - élévation en ordonnées) ;
  o en bas : un histogramme correspondant à une projection 1D de la carte sur la base des angles d'azimut h_0 ;
  o à droite : un histogramme correspondant à une projection 1D de la carte sur la base des angles d'élévation h_$\varphi$ ;

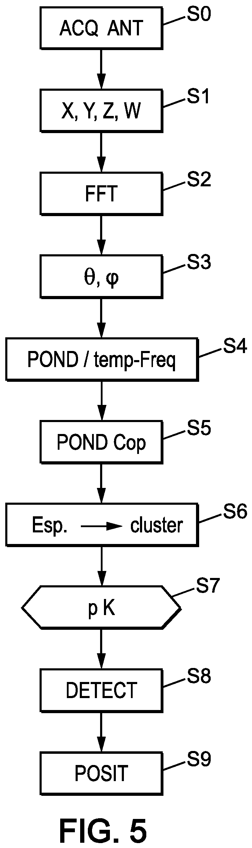

- La figure 5 illustre un exemple de récapitulatif d'un traitement au sens de l'invention ;

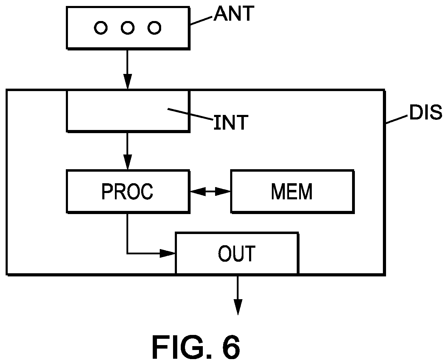

- La figure 6 illustre une unité de traitement UT d'un dispositif au sens de l'invention.

Dans ce qui suit, on s'intéresse à la localisation dans un espace de dimension $M \geq 2$, en utilisant le même principe que les méthodes basées sur des histogrammes, telles que DUET ou DEMIX présentées ci-après, mais en réduisant fortement leur complexité.

Pour une fenêtre temporelle d'observation de durée $T$ donnée, on calcule un ensemble de $D$ descripteurs. Préférentiellement, ces descripteurs sont calculés sur des trames court-terme à partir d'une décomposition en sous-bandes après application d'une transformation temps-fréquence - généralement une FFT - pour mettre à profit la parcimonie fréquentielle des signaux (comme les signaux de parole par exemple).

Ces descripteurs, corrélés avec la localisation des sources sonores présentes dans le champ sonore, permettent d'obtenir une série d'estimées, généralement bruitées, des directions d'arrivée (DOA) des sources $s_i$, $1 \leq i \leq l$.

Ces estimées sont ensuite quantifiées selon un maillage de taille $K$ de l'espace contenant les sources. Dans le cas d'une captation ambisonique par exemple où il s'agit de localiser des sources selon leurs coordonnées polaires (*azimut, élévation),* on peut réaliser un maillage, généralement à base de polygones, de la sphère avec une certaine résolution en azimut et élévation, chaque maille pouvant être représentée par le « centre » du polygone associé et identifié par un couple d'angles ($\Theta_k, \varphi_k$), $1 \leq k \leq K.$

Sur la base de ce maillage, on en déduit un histogramme h des localisations estimées.

Dans le cas d'une antenne de type ambisonique par exemple, le calcul de descripteurs permet d'obtenir D couples ($\tilde{\theta}_d, \tilde{\varphi}_d$), $1 \leq d \leq D$, à partir desquels on déduit un histogramme $h(\theta_k, \varphi_k)$, $1 \leq k \leq K$, avec en pratique $D \gg K$.

Ensuite, plutôt que d'effectuer le traitement de clustering directement dans cet espace de dimension M comme dans les techniques classiques DUET ou DEMIX (opération qui s'avère habituellement complexe), il est proposé ici de projeter cet histogramme sur des axes unidimensionnels correspondant à une base de l'espace de localisation. Dans le cas ambisonique, on pourra par exemple projeter cet histogramme suivant deux axes $\Theta$ et $\varphi$.

A partir des projections suivant les différents axes, on recherche les maxima locaux des histogrammes projetés qui sont de simples fonctions unidimensionnelles.

L'intérêt de cette projection est de:

- réduire la complexité de l'algorithme par rapport à une recherche en au moins deux dimensions, et
- améliorer la robustesse de la détection au bruit et à la réverbération : en projetant suivant des axes de l'espace des positions des sources, on dispose en effet d'une quantité de données plus importante pour la recherche dans une seule direction, ce qui a pour effet de réduire la variance de l'estimateur de la DOA dans cette direction.

En pratique, on peut mettre à profit ce « surplus » de données pour améliorer la réactivité du système à la détection de sources. A variance constante, on peut en effet utiliser une fenêtre de taille $T' < T$ pour estimer les directions d'arrivées par rapport à une recherche en dimension M.

Enfin, une fois les maxima dans chaque direction trouvés, notés $\hat{\Theta}_{1 \leq l \leq L}$ et $\hat{\varphi}_{1 \leq p \leq P}$ dans le cas d'une antenne sphérique, une étape de sélection, exploitant l'histogramme multi-dimensionel (de dimension M, avec dans cet exemple M=2) comme mesure de probabilité, permet de déterminer les couples $(\hat{\Theta}_l, \hat{\varphi}_p)$ (ou M-uplets dans le cas général) les plus pertinents.

Différents modes de sélection sont envisageables, permettant de privilégier la robustesse ou la complexité de la sélection.

On décrit ci-après une implémentation pour une antenne sphérique permettant d'obtenir une représentation de type ambiophonique (ou « ambisonique » ci-après) du champ sonore. Toutefois, le procédé peut tout aussi bien s'appliquer à tout autre type d'antenne de microphones, au moins 2D comme une grille rectangulaire, voire 3D (avec répartition volumique des capteurs) : on parle « d'antennes acoustiques » à n dimensions.

La représentation ambisonique consiste en une projection du champ acoustique sur une base de fonctions harmoniques sphériques comme illustrées sur la figure 2, pour obtenir une représentation spatiale de la scène sonore.

La fonction $Y_{mn}^{\sigma}(\theta, \varphi)$ est l'harmonique sphérique d'ordre m et d'indice $n\sigma$, dépendant des coordonnées sphériques $(\theta, \varphi)$, définie avec la formule suivante :

$$Y_{mn}^{\sigma}(\theta, \varphi) = \tilde{P}_{mn}(\cos \varphi) \cdot \begin{cases} \cos n\theta & si \ \sigma = 1 \\ \sin n\theta & si \ \sigma = -1 \ et \ n \geq 1 \end{cases}$$

où $\tilde{P}_{mn}(\cos \varphi)$ est une fonction polaire impliquant le polynôme de Legendre :

$$\tilde{P}_{mn}(x) = \sqrt{\epsilon_n \frac{(m-n)!}{(m+n)!}} (-1)^n (1 - \cos^2 x)^{\frac{n}{2}} \frac{d^n}{dx^n} P_m(x)$$

avec $\varepsilon_0 = 1$ et $\varepsilon_0 = 2$ pour $n \geq 1$ et

$$P_m(x) = \frac{1}{2^m \cdot m!} \frac{d^m}{dx^m} (x^2 - 1)^m$$

En théorie, la captation ambisonique (par exemple au format normalisé SID/N3D), notée y(t), d'une source s(t) d'incidence $(\theta, \varphi)$, se propageant en champ libre est donnée par le produit matriciel suivant :

$$\boldsymbol{y}(t) = [Y_{mn}^{\sigma}(\theta, \varphi)]_{m,n} \cdot s(t) = \begin{bmatrix} W \\ X(\theta, \varphi) \\ Y(\theta, \varphi) \\ Z(\theta, \varphi) \\ \vdots \end{bmatrix} = \begin{bmatrix} 1 \\ \sqrt{3} \cos \theta \cos \varphi \\ \sqrt{3} \sin \theta \cos \varphi \\ \sqrt{3} \sin \varphi \\ \vdots \end{bmatrix} s(t) \quad (1)$$

Dans cette équation, les quatre premières composantes (W,X,Y,Z), appelées « *ambisonie d'ordre 1* » ou « *B-format* », sont directement liées au champ acoustique :

- W est la composante omnidirectionnelle et mesure le champ acoustique *p(t)*, et
- les composantes X, Y et Z mesurent les gradients de pression orientés suivant les trois dimensions de l'espace (correspondant aux deux premières lignes de la figure 2), et mesurent donc les composantes de la vitesse particulaire $\vec{v}(t)$.

Le champ acoustique p(t) et la vitesse particulaire $\vec{v}(t)$ sont deux grandeurs qui permettent de qualifier le champ acoustique. Notamment, leur produit représente le flux instantané d'énergie acoustique à travers une surface élémentaire, également appelé intensité acoustique $\vec{I}(t)$ :

$$\vec{I}(t) = p(t) \cdot \vec{v}(t) \quad (2)$$

On peut montrer que, pour une onde plane se déplaçant en champ libre, ce vecteur d'intensité acoustique $\vec{I}(t)$ est orthogonal au front d'onde et pointe dans la direction de la source émettrice de l'onde sonore. Ainsi, la mesure de ce vecteur permet d'estimer directement la « position » de la source à l'origine du champ acoustique (plus précisément, en réalité, la direction d'arrivée de l'onde sonore liée à la source émettrice).

Par définition même, l'ordre 1 ambisonique permet d'estimer directement l'intensité acoustique en multipliant le canal omnidirectionnel W par chacun des gradients de pression (X,Y,Z) :

$$\vec{I}(t)= W(t)\begin{bmatrix}X(t)\\Y(t)\\Z(t)\end{bmatrix} \qquad (3)$$

Dans le cas théorique d'une onde sonore seule se propageant en champ libre (sans obstacle) dans l'air, ce vecteur intensité acoustique se déduit directement des équations (1) et (3) comme suit :

$$\vec{I}(t)= \begin{bmatrix}\sqrt{3}\cos\theta\cos\varphi\\\sqrt{3}\sin\theta\cos\varphi\\\sqrt{3}\sin\varphi\end{bmatrix} s^2(t) \qquad (4)$$

De l'équation (4), on dérive aisément les angles d'incidence de l'onde sonore $(\theta,\varphi)$ à partir des simples relations trigonométriques suivantes :

$$\begin{cases}\theta = & \arctan\left(\dfrac{WY}{WX}\right)\\[2em]\varphi = & \arctan\left(\dfrac{WZ}{\sqrt[2]{(WX)^2 + (WY)^2}}\right)\end{cases} \qquad (5)$$

Généralement, les signaux $s(t)$ étant aléatoires, le vecteur intensité instantané défini par l'équation (4) est particulièrement bruité du fait de la grande variabilité de $s^2(t)$, ce qui a pour conséquence de bruiter également l'estimation de la direction d'arrivée par l'équation (5). Aussi, on peut préférer dans ce cas baser les estimations de la direction d'arrivée sur un vecteur intensité « moyen » qui présente une plus grande stabilité spatiale :

$$\begin{cases}\theta = & \arctan\left(\dfrac{E\{WY\}}{E\{WX\}}\right)\\[2em]\varphi = & \arctan\left(\dfrac{E\{WZ\}}{\sqrt[2]{E(WX)^2 + E(WY)^2}}\right)\end{cases} \qquad (6)$$

où $E\{\ \}$ est l'opérateur «espérance ». En pratique, cette espérance est calculée, sous hypothèse d'ergodicité, par moyennage sur différents échantillons temporels sur une fenêtre dont la taille est un compromis entre la réactivité souhaitée du système et la variance de l'estimation.

Dans le cas d'un champ généré par plusieurs sources simultanées, le théorème de superposition (les champs associés à chaque source se sommant pour former le champ total) implique que l'intensité acoustique est un mélange pondéré d'équations (4).

Néanmoins, ce mélange ne correspond jamais en principe à l'encodage d'une onde plane (sauf cas très particulier où toutes les sources viennent de la même direction, ou encore où une source a beaucoup plus d'énergie que les autres). Aussi, pour essayer d'estimer au mieux la direction d'arrivée des différentes ondes sonores, on profite de la parcimonie fréquentielle des sources sonores qui suppose qu'à court-terme, les sources ont des supports fréquentiels disjoints.

Tant que le nombre de sources n'est pas trop important, cette hypothèse est valide et dans un grand nombre de bandes de fréquences, il existe une source prépondérante qui « impose » sa direction d'arrivée.

En pratique, on peut alors décomposer le signal ambisonique en une succession de trames sur lesquelles on applique une transformation temps-fréquence, généralement une Transformée de Fourier Rapide (notée « FFT » ci-après) telle que:

$$Y(n,f) = \sum_{t=0}^{T-1} \begin{pmatrix} win(t).W(n,t) \\ win(t).X(n,t) \\ win(t).Y(n,t) \\ win(t).Z(n,t) \\ \vdots \end{pmatrix} e^{-2i\pi ft} \qquad (7)$$

où $n$ est le numéro de la trame et $t$ est l'indice de l'échantillon dans la trame $n$, $T$ est la taille en échantillons de la trame et win($t$) une fenêtre d'apodisation (typiquement une fenêtre de Hanning ou de Hamming).

Le choix de la taille de trame dépend de la durée de stationnarité des signaux analysés : on choisira des trames d'une durée de l'ordre de quelques dizaines de milliseconde (typiquement de 10 à 50ms pour des signaux de parole).

On suppose ici que les variables p(t) et $\vec{v}$(t) suivent un modèle à bandes de fréquences étroites *(narrow-band)*, du type : $p(t) = p \cos(2\pi ft + a_p)$ et $\vec{v}(t) = \vec{v} \cos(2\pi ft + a_v)$.

Sous ce formalisme, on montre que la partie réelle de l'intensité acoustique (également appelée *« intensité active »*), dans le domaine fréquentiel donc, porte l'information de propagation du champ sonore, et s'exprime en fonction des composantes ambisoniques selon l'équation suivante :

$$I(n,f) = \frac{1}{2}\Re\{p\vec{v}^*\} = \frac{1}{2}\Re\left\{W(n,f)\begin{bmatrix} X^*(n,f) \\ Y^*(n,f) \\ Z^*(n,f) \end{bmatrix}\right\} \qquad (8)$$

où $\Re\{.\}$ désigne la partie réelle d'un nombre complexe.

Si l'on suppose une parcimonie parfaite (les supports fréquentiels des signaux étant alors disjoints), une seule source est active dans chaque bande de fréquences, source dont l'intensité acoustique est représentative de son encodage spatial. On peut alors déterminer dans chaque bande de fréquences la direction d'arrivée de la source prépondérante à partir des équations (5) et (8) :

$$\begin{cases} \theta(n,f) = \arctan\left(\frac{\Re\{W^*Y\}}{\Re\{W^*X\}}(n,f)\right) \\ \varphi(n,f) = \arctan\left(\frac{\Re\{W^*Z\}}{\sqrt[2]{\Re\{W^*X\}^2 + \Re\{W^*Y\}^2}}(n,f)\right) \end{cases} \qquad (9)$$

Ainsi, pour une série donnée de n trames, on obtient une collection de couples d'angles $\{(\theta(n,f), \varphi(n,f))\}_{n_0 \le n < n_0+N, f_{min} \le f \le f_{max}}$ à partir desquels on constitue un histogramme $h(\theta_l, \varphi_p)$ représentatif de la distribution des angles d'arrivées du champ observé.

La quantification de la sphère 3D ($\theta_l$, $\varphi_p$) peut être réalisée de différentes manières, par exemple sur une base « rectangulaire » telle que :

$$h(\theta_l, \varphi_p) = \operatorname*{card}_{n,f}\big((\theta,\varphi)(n,f)\big) \Big/ \begin{cases} -\pi + l\frac{2\pi}{L} \le \theta(n,f) < -\pi + (l+1)\frac{2\pi}{L}, & 0 \le l < L \\ -\frac{\pi}{2} + p\frac{\pi}{P} \le \varphi(n,f) < -\frac{\pi}{2} + (p+1)\frac{\pi}{P}, & 0 \le p < P \end{cases} \qquad (10)$$

Dans le cas idéal de sources ponctuelles à supports fréquentiels disjoints se propageant en champ libre ou *anéchoïque* (aucune réflexion), la distribution de ces angles est théoriquement purement « clairsemée » (ou *« sparse »* en anglais) : on observe un pic à chacune des positions dans l'espace correspondant aux directions d'arrivée de chaque source.

Dans un environnement acoustique réel avec des parois réfléchissantes, chaque source peut en revanche générer un champ acoustique complexe composé d'un très grand nombre de réflexions et d'un champ diffus, composantes qui dépendent de la nature des parois et des dimensions de l'environnement acoustique. Ces réflexions et champ diffus peuvent être vus comme une infinité de sources secondaires d'énergie et de direction d'arrivée variables, avec pour principale conséquence que l'encodage de chaque source ne suit plus exactement l'équation (4), mais une version bruitée de cette équation.

En situation réelle, le vecteur intensité $I(n,f)$ pointe effectivement dans la direction de la source prépondérante dans la bande $f$, mais « en moyenne » seulement.

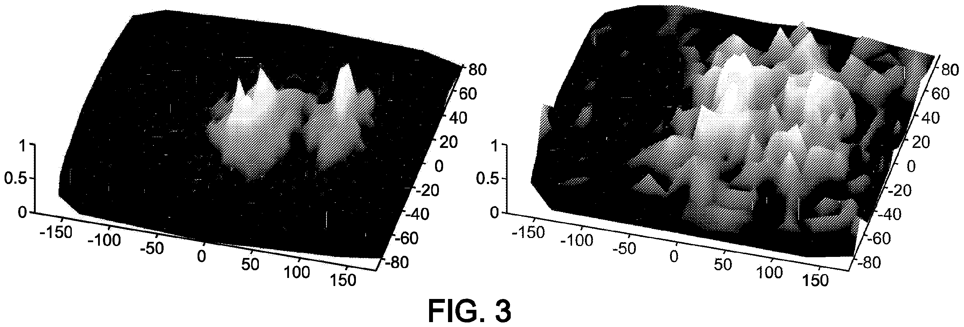

La figure 3 représente un histogramme des angles d'arrivées $h(\theta,\varphi)$. On observe une distribution de ces angles autour de la position des sources, avec une variance plus ou moins importante en fonction de la nature acoustique du lieu (ici, des parois plus ou moins réfléchissantes).

L'histogramme donné par l'équation (10) s'avère en pratique bruité, notamment dans les zones de faible énergie où la réverbération est prépondérante. Cette réverbération peut être vue comme un champ stationnaire ne provenant d'aucune direction particulière. Elle se manifeste, en termes de direction d'arrivée, comme un bruit diffus. Pour limiter l'influence de ce champ diffus, une pondération proportionnelle à l'énergie dans la bande de fréquences considérée peut être appliquée comme suit:

$$\tilde{h}(\theta_l,\varphi_p) = \sum_{n,f} g(W(n,f)) \Big/ \begin{cases} -\pi + l\dfrac{2\pi}{L} \le \theta(n,f) < -\pi + (l+1)\dfrac{2\pi}{L}, & 0 \le l < L \\ -\dfrac{\pi}{2} + p\dfrac{\pi}{P} \le \varphi(n,f) < -\dfrac{\pi}{2} + (p+1)\dfrac{\pi}{P}, & 0 \le p < P \end{cases} \qquad (11)$$

où $g(x)$ est généralement une fonction positive et monotone sur les demi-espaces $x \le 0$ (décroissante) et $x \ge 0$ (croissante) : par exemple IxI, $x^2$, ou encore l'énergie en échelle logarithmique $10.\log(1 + x^2)$.

Cela permet de privilégier les bandes de fréquences de forte énergie, généralement significative de la présence d'une onde sonore en mouvement.

Une autre façon de pondérer l'histogramme (ou la projection de la carte) est de prendre en compte le caractère diffus du champ dans cette bande de fréquences. En traitement ambisonique, il est courant de définir le caractère diffus d'un champ acoustique par sa ressemblance (ou dissemblance) à une onde plane donnée par l'équation (1). Si l'on définit le critère $c_{op}$ suivant :

$$c_{op} = \frac{X^2 + Y^2 + Z^2}{3W^2} \qquad (12)$$

ce critère est égal à 1 pour un champ généré par une onde plane se propageant en champ libre, et s'écarte de la valeur 1 si l'onde n'est pas plane : c'est notamment le cas en présence de plusieurs ondes planes, ou de réverbération importante. On peut également pondérer l'histogramme par ce critère :

$$\tilde{h}(\theta_l,\varphi_p) = \sum_{n,f} r\left(c_{op}(n,f)\right) \Big/ \begin{cases} -\pi + l\dfrac{2\pi}{L} \le \theta(n,f) < -\pi + (l+1)\dfrac{2\pi}{L}, & 0 \le l < L \\ -\dfrac{\pi}{2} + p\dfrac{\pi}{P} \le \varphi(n,f) < -\dfrac{\pi}{2} + (p+1)\dfrac{\pi}{P}, & 0 \le p < P \end{cases} \qquad (13)$$

où $r(x)$ est une fonction mesurant l'écart à 1. On peut choisir par exemple une gaussienne centrée en 1, soit $r(x) = e^{-\frac{(x-1)^2}{\sigma^2}}$, où le paramètre $\sigma^2$ est choisi en fonction de la dispersion de $c_{op}$ en présence de réverbération.

Cette pondération permet d'exclure les instants temps-fréquence où le champ est diffus et ne donne pas d'information fiable sur la présence d'une onde directionnelle.

On peut dans une autre implémentation pondérer l'histogramme par une combinaison des critères énergétiques $g(W)$ et onde plane $r(c_{op})$, ou tout autre critère permettant de mesurer le caractère directionnel du champ observé.

Ensuite, la détection et localisation des sources consiste à effectuer un traitement de regroupement ou « clustering » de cette distribution $\tilde{h}(\theta_l,\varphi_p)$ dans cet espace 2D $(\theta,\varphi)$, le centre des groupes ou « clusters » représentant la position des sources.

Ici, une réalisation consiste à projeter cet histogramme suivant les axes $\theta$ et $\varphi$ pour constituer des histogrammes 1D $h_\theta$ et $h_\varphi$ de la façon suivante :

$$\begin{cases} h_\theta(\theta_l) = \underset{\varphi_p}{\mathrm{E}}\{\tilde{h}(\theta_l, \varphi_p)\} \\ h_\varphi(\varphi_p) = \underset{\theta_l}{\mathrm{E}}\{\tilde{h}(\theta_l, \varphi_p)\} \end{cases} \tag{14}$$

où $E_x(.)$ est l'opérateur « espérance » suivant la variable x. La recherche des sources et de leurs positions consiste alors à rechercher les maxima locaux dans les histogrammes $h_\theta$ et $h_\varphi$.

La recherche de maxima locaux peut être réalisée de différentes manières. On peut procéder par une approche analytique en effectuant une recherche de maxima locaux sur chacun des histogrammes 1D. Comme les histogrammes 1D sont généralement bruités en présence de réverbération, on applique au préalable un filtre préférentiellement passe-bas à chacun des histogrammes pour éviter la détection de multiples sources :

$$\begin{cases} \tilde{h}_\theta(\ ) = f_\theta * h_\theta(\ ) \\ \tilde{h}_\varphi(\ ) = f_\varphi * h_\varphi(\ ) \end{cases} \tag{15}$$

où les paramètres des filtres $f_\theta$ et $f_\varphi$, à savoir longueur et fréquence de coupure, peuvent être différents suivant les dimensions.

L'azimut étant une variable circulaire de période $2\pi$, il est intéressant d'appliquer une convolution circulaire plutôt qu'une convolution classique pour éviter les problèmes de filtrage aux extrémités, ce qui peut être calculé par FFT pour réduire la complexité.

La recherche de maxima peut également procéder par approche probabiliste en considérant les histogrammes comme un mélange de variables qui suivent une loi de probabilité donnée. Selon cette loi, on recherche les paramètres représentatifs de la position des sources. Classiquement, on peut considérer les histogrammes comme un mélange de gaussiennes (ou « GMM » pour Gaussian Mixture Model), ou encore des distributions de *von Mises* plus adaptées à des variables cycliques comme l'azimut. On recherche, par une approche itérative de type Expectation-Maximisation, à minimiser une distance probabiliste, en atteignant ainsi typiquement le maximum de vraisemblance, pour estimer les paramètres de chaque distribution, dont les moyennes fournissent la position des sources.

Cette recherche produit alors deux ensembles d'angles suivant chaque direction :

$$\begin{cases} \{\hat{\theta}_k\}_{1 \le k \le K} \\ \{\hat{\varphi}_q\}_{1 \le q \le Q} \end{cases}$$

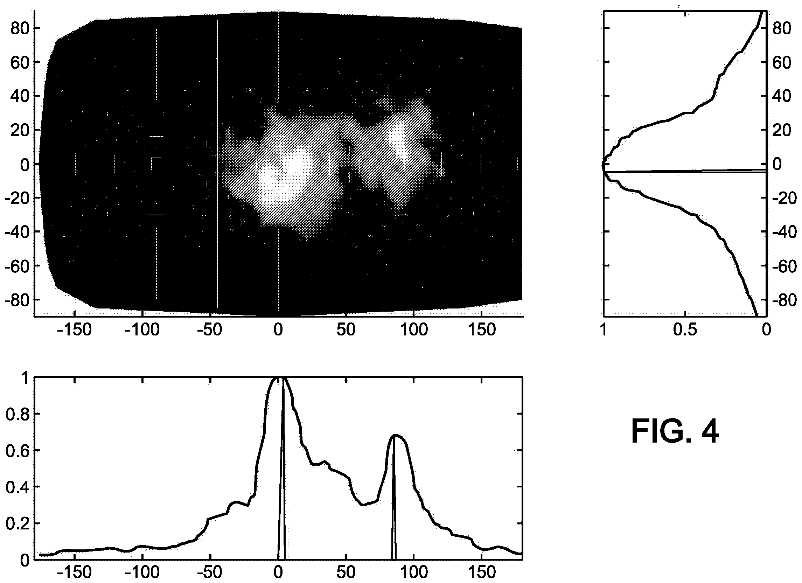

La figure 4 montre un exemple d'histogrammes obtenu en présence de deux sources aux positions (0,0) et (90,10), dans une salle moyennement réverbérante (TR60 de 0,375 seconde : ici, « TR60 » est défini comme le temps nécessaire aux réflexions tardives pour subir une atténuation de 60dB par rapport aux premières réflexions).

La recherche produit les ensembles $\{\hat{\theta}_k\}$ = {6,90} *(K = 2)* et $\{\hat{\varphi}_q\}$ = {-6} *(Q = 1)*, caractérisant ainsi le nombre de pics observés sur les axes $\theta$ (2 pics) et $\varphi$ (1 pic).

A partir de ces ensembles d'angles, une étape suivante consiste à recréer les U couples d'angles $\{\hat{\theta}_u, \hat{\varphi}_u\}$, 1 $\le u \le U$ localisant les sources présentes dans le champ acoustique en associant un azimut $\hat{\theta}_k$ à une élévation $\hat{\varphi}_q$. Dans l'exemple donné ici, le nombre de sources U est donné par :

$$U = \max(K, Q)$$

Pour cette recherche de couples, on sélectionne une direction privilégiée, généralement celle présentant le plus de sources détectées. Dans le cas de la figure 4, il s'agit de la dimension des azimuts. La recherche des couples utilise l'histogramme 2D comme mesure de pertinence. Dans une première approche, pour chaque $\hat{\theta}_k$, on recherche dans l'ensemble des élévations détectées, l'élévation $\hat{\varphi}_{k'}$ présentant la probabilité la plus élevée, probabilité exprimée par $\tilde{h}(\theta, \varphi)$, soit :

$$\forall k \in \{1, \dots, K\}, (\hat{\theta}_k, \hat{\varphi}_{k'}) \ / \ k' = \arg\left(\max_{q \in \{1..Q\}}\left(\tilde{h}(\hat{\theta}_k, \hat{\varphi}_q)\right)\right) \tag{16}$$

Dans le cas proposé sur la figure 4, cela revient à former les couples de sources :

(6,-6), et (90,-6).

Dans cette approche, on note un biais par rapport aux positions théoriques (0,0) et (90,10), notamment en élévation. A cause de la réverbération et du fait que les élévations des différentes sources sont, en pratique, relativement proches (les sources sonores comme la voix ou les instruments sont généralement à des hauteurs similaires), la projection vient mélanger les distributions des différentes sources, rendant difficile la détection des multiples sources.

Pour améliorer la robustesse et réduire ce biais de localisation, une autre approche, plus complexe, consiste à ne pas tenir compte des élévations détectées, mais à rechercher de manière exhaustive dans une tranche autour de $\hat{\theta}_k$ le couple $(\hat{\theta}_{k''}, \hat{\varphi}_{k'})$ qui maximise $\tilde{h}(\theta, \varphi)$, soit :

$$\forall k \in \{1, \dots, K\}, (\hat{\theta}_{k''}, \hat{\varphi}_{k'}) / (k'', k') = arg\left(\max_{k-\Delta \leq l \leq k+\Delta, 1 \leq p \leq P}\left(\tilde{h}(\theta_l, \varphi_p)\right)\right) \tag{17}$$

où $\Delta$ fixe le voisinage quantifié autour de l'azimut détecté.

On peut s'autoriser en pratique un voisinage d'une dizaine de degrés, voire plus. Bien qu'un peu plus complexe que la précédente approche donnée par l'équation (16), cette approche permet de s'assurer que le maximum local en 2D est bien détecté. Dans le cas proposé de la figure 4, cela revient à former les couples (0,-6) et (90,15), ce qui permet de réduire le biais par rapport à l'approche précédente.

Dans le cas où le nombre de sources détectées est égal dans chaque direction (et supérieur ou égale à deux), avec donc $K = Q$, la sélection de l'axe privilégié ne peut se faire selon le nombre de sources. Dans ce cas, une première approche consiste à rechercher la combinaison de couples $\{(\hat{\theta}_k, \hat{\varphi}_k)\}$ qui soit la plus probable. Cela revient à rechercher la permutation $perm_\varphi$ dans l'ensemble $\{1, \dots, K\}$ qui maximise une mesure de probabilité, par exemple la norme L1 de la mesure $\tilde{h}( )$ :

$$perm_\varphi = arg\left(\max_{perm_\varphi}\left(\sum_{k=1}^{K} \tilde{h}\left(\hat{\theta}_k, \hat{\varphi}_{perm_\varphi(k)}\right)\right)\right)$$

L'ensemble des sources détectées est alors $\{(\hat{\theta}_k, \hat{\varphi}_{perm_\varphi(k)})\}_{k \in \{1, \dots, N\}}$.

Dans une autre réalisation, on peut sélectionner l'axe privilégié comme celui présentant la forme la moins « plate », c'est-à-dire la distribution avec les maxima locaux les plus facilement détectables. Cette approche permet de sélectionner la distribution la moins sensible à la réverbération et présentant a priori le biais de localisation le plus faible. En pratique, on peut se baser sur une mesure dérivée de la platitude spectrale *(spectral flatness)* donnée par le rapport entre la moyenne géométrique et la moyenne arithmétique d'une variable aléatoire $X$ :

$$flatness(X) = \frac{\sqrt[S]{\prod_{s=1}^{S} x_s}}{\frac{1}{S}\sum_{s=1}^{S} x_s} \tag{18}$$

où les $(x_1, \dots, x_S)$ sont des échantillons de la variable X.

Cette mesure, généralement utilisée pour mesurer le caractère tonal d'un signal sonore à partir de son spectre, permet de quantifier la concentration des valeurs des échantillons de la variable $X$, ce qui revient à donner une mesure de la « platitude » de la distribution de la variable $X$. Une valeur proche de 1 indique une variable parfaitement plate (cas d'un bruit blanc uniforme), tandis qu'une valeur proche de 0 indique une variable concentrée sur quelques valeurs (0 pour un Dirac). Dans une réalisation de l'invention, dans le cas où un nombre égal d'angles est trouvé dans chaque direction, on choisit par exemple l'axe privilégié présentant la plus faible platitude, et on mène ensuite la recherche des couples suivant l'équation (16) ou (17), suivant le mode sélectionné.

Dans une implémentation simplifiée, on peut sélectionner l'azimut comme axe privilégié car:

- les sources présentent statistiquement des différences d'azimut plus marquées,
- l'azimut souffre moins de biais du fait de la répartition plus isotrope autour de la direction d'arrivée, et
- l'élévation, du fait de la forte réflexion sur le sol, présente souvent une distribution plus étalée avec un biais vers les élévations inférieures.

Enfin, la mesure de *flatness* peut être également un critère pour décider ou non de la présence de sources ponctuelles dans le mélange. En effet, les méthodes décrites détectent habituellement un ou plusieurs maxima locaux, bien que le champ puisse être complètement diffus et ne contenir aucune onde se propageant. La mesure de *flatness* permet de caractériser les environnements diffus, et servir de détection d'activité sonore. Il s'agit donc d'une assistance fiable quant à la détection de présence ou d'absence de sources dans le champ sonore, permettant de déclencher ensuite l'identification des positions de sources.

On a résumé les étapes du procédé dans l'exemple de réalisation donné ci-dessus sur la figure 5. Au cours d'une première étape S0, l'antenne à microphones acquiert les signaux sous forme de trames successives, captés dans l'environnement acoustique. Préférentiellement, les microphones peuvent être agencés dans l'antenne pour convenir à une représentation ambisonique de la scène sonore et on peut en déduire, à l'ordre un, les composantes : X, Y, Z, W, à l'étape S1. Ensuite, on applique une transformée de Fourier rapide de type FFT à ces signaux à l'étape S2. Dans l'exemple illustré ci-dessus, on a choisi une base vectorielle à deux dimensions, en azimut et en élévation, pour réaliser la projection de la carte d'activité acoustique (étape S3). Suivant le même formalisme, cette réalisation peut s'appliquer directement à toute antenne produisant une représentation du champ sonore et de ses caractéristiques principales : c'est notamment le cas des antennes planes et des techniques associées d'holographie acoustique qui permettent d'estimer certaines grandeurs comme le champ de pression et la vélocité particulaire qui mènent au vecteur d'intensité acoustique. Il serait également possible, avec des antennes acoustiques particulières, d'obtenir une représentation dans une base vectorielle 3D : en rayon r, en azimut et en élévation, par exemple, pour réaliser des projections de la carte sur chaque axe correspondant r, puis azimut, puis élévation. Une telle réalisation permettrait d'enrichir encore la détection et la localisation (au détriment de la simplicité de traitement, avec trois coordonnées de projection à traiter au lieu de deux précédemment). Une fois que la carte d'activité acoustique est représentée par ses projections sur les axes « azimut » et « élévation » de la base vectorielle à l'étape S3, on peut appliquer à l'étape S4 une pondération pour accorder une plus grande importance aux trames de plus haute énergie (« pondération dans le temps ») ou pour accorder une plus grande importance aux bandes de fréquences de plus haute énergie (après application de la FFT et une décomposition en sous-bandes) (« pondération dans les fréquences »).

On peut appliquer en outre une pondération pour favoriser une détection de propagation d'onde plane selon le critère *Cop* précité, à l'étape S5. Ensuite la recherche de maximum local dans la (ou les) projection(s) de la carte peut être mise en oeuvre à l'étape S6 avec la technique de regroupement par clusters. En cas d'identification d'un pic à l'étape S7 (par exemple dans la projection la plus robuste selon l'angle d'azimut comme expliqué plus haut), on peut, suite à cette étape de détection S8, procéder à une recherche plus fine de la position de la (ou des) source(s) autour de cette position en azimut, à l'étape suivante S9.

Ensuite l'identification de la position d'une source ou plusieurs peut permettre d'augmenter la réalité virtuelle d'un rendu. Par exemple dans le cas d'une vidéoconférence, il peut être avantageux de zoomer l'image d'un interlocuteur sur son visage qui peut être alors détecté comme la position d'une source sonore (sa bouche).

On a illustré sur la figure 6 très schématiquement un dispositif DIS pour la mise en oeuvre du procédé ci-avant. En particulier, le dispositif comporte :

- une interface d'entrée INT propre à recevoir des signaux issus de l'antenne de microphones ANT,

- une unité de traitement comportant :

    * une mémoire MEM propre à stocker des données d'instructions d'un programme informatique au sens de l'invention, et éventuellement d'autres données temporaires ou non pour la mise en oeuvre du procédé ci-avant, et

    * un processeur PROC apte à opérer avec la mémoire MEM et avec l'interface d'entrée INT pour lire les instructions du programme dans la mémoire MEM et appliquer le procédé décrit précédemment, et

- une interface de sortie OUT par exemple pour délivrer un signal caractérisant la présence d'une source et éventuellement sa position dans l'environnement sonore.

## Revendications

1. Procédé de traitement de signaux acoustiques pour une détection d'une ou plusieurs sources sonores dans une scène sonore, le procédé comprenant :

    - obtenir une pluralité (D) de signaux représentatifs de la scène sonore, captés par une pluralité de microphones de positions prédéfinies,

- à partir des signaux captés par les microphones et des positions des microphones, appliquer une quantification de mesures directionnelles d'intensité sonore et établir une carte d'activité acoustique correspondante dans un espace de localisation des sources sonores, ledit espace étant de dimension N,

**Caractérisé en ce que** le procédé comporte en outre :

- construire au moins une base vectorielle de dimension inférieure à N,
- projeter la carte d'activité acoustique selon au moins un axe de la base vectorielle, et
- rechercher au moins un pic local d'activité acoustique dans la projection de la carte, un pic local identifié correspondant à la présence d'une source sonore dans la scène.

2. Procédé selon la revendication 1, **caractérisé en ce que** les signaux sont obtenus sur des trames successives de durée correspondant chacune à une période d'observation prédéterminée, et **en ce que** l'établissement de la carte d'activité acoustique comporte :

- rassembler des indices de plusieurs trames consécutives, et
- quantifier lesdits indices sur un maillage de l'espace de dimension N.

3. Procédé selon la revendication 2, **caractérisé en ce que** la durée d'observation est comprise entre 10 et 50 ms.

4. Procédé selon l'une des revendications précédentes, **caractérisé en ce que** la recherche de pic local d'activité acoustique dans la projection de la carte comporte :

- traiter la projection de la carte par une technique de clustering, et
- identifier des centres de clusters comme positions de sources.

5. Procédé selon l'une des revendications précédentes, **caractérisé en ce qu'**il comporte en outre :

- à partir d'au moins une coordonnée du pic local, estimer dans la base vectorielle au moins une première direction d'arrivée du son issu de la source sonore correspondant au pic local.

6. Procédé selon la revendication 5, **caractérisé en ce qu'**il comporte en outre :

- à partir de la coordonnée du pic local dans la base vectorielle, affiner l'estimation de la direction d'arrivée du son en traitant la carte d'activité acoustique dans un secteur seulement de l'espace de dimension N, incluant ladite première direction d'arrivée.

7. Procédé selon l'une des revendications précédentes, **caractérisé en ce qu'**il comporte l'application d'une décomposition en sous-bandes de fréquences aux signaux captés par les microphones.

8. Procédé selon l'une des revendications précédentes, **caractérisé en ce que** le procédé comporte en outre l'application d'une pondération à la quantification des mesures directionnelles d'intensité sonore, de façon proportionnelle à une énergie acoustique estimée pour chaque mesure à quantifier.

9. Procédé selon la revendication 8, prise en combinaison avec la revendication 2, **caractérisé en ce qu'**on estime une énergie acoustique par trame et **en ce qu'**on applique une pondération avec un poids plus élevé à la quantification des mesures directionnelles d'intensité sonore issues des trames ayant le plus d'énergie.

10. Procédé selon la revendication 8, prise en combinaison avec la revendication 7, **caractérisé en ce qu'**on estime une énergie par sous-bande pour identifier des sous-bandes ayant le plus d'énergie acoustique et **en ce qu'**on applique une pondération avec un poids plus élevé à la quantification des mesures directionnelles d'intensité sonore ayant une plus grande représentation dans lesdites sous-bandes ayant le plus d'énergie.

11. Procédé selon l'une des revendications précédentes, **caractérisé en ce que** les microphones sont agencés pour capter des signaux sonores définis dans une base d'harmoniques sphériques en représentation ambisonique, et **en ce qu'**il est construit au moins une base vectorielle de dimension un, parmi :

- une première base définissant des valeurs d'angle d'azimut de direction d'arrivée du son, et comportant un axe d'angles d'azimut sur lequel est projetée la carte d'activité acoustique, et
- une deuxième base définissant des valeurs d'angle d'élévation de direction d'arrivée du son, et comportant un axe d'angles d'élévation sur lequel est projetée la carte d'activité acoustique.

12. Procédé selon la revendication 11, **caractérisé en ce que** la représentation ambisonique comporte au moins l'ordre un, et **en ce que** les angles d'azimut et d'élévation sont respectivement définis en fonction des quatre composantes ambisoniques d'ordre 1, notées W, X, Y, Z, comme suit :

$$\begin{cases} \theta = & \arctan\left(\dfrac{f(WY^*)}{f(WX^*)}\right) \\ \varphi = & \arctan\left(\dfrac{g(WZ^*)}{\sqrt[2]{\|g(WX^*)\|^2 + \|g(WY^*)\|^2}}\right) \end{cases} \qquad (5)$$

*f* et *g* étant des fonctions possibles parmi l'identité, l'espérance statistique, la partie réelle d'une grandeur complexe, ou une combinaison de tout ou partie de ces fonctions.

13. Procédé selon la revendication 12, **caractérisé en ce qu'**il est estimé un critère de planéarité d'une onde sonore issue d'une source en fonction des composantes ambisoniques X, Y, Z et W :

$$c_{op} = \frac{f(\|X\|^2) + f(\|Y\|^2) + f(\|Z\|^2)}{3f(\|W\|^2)}$$

et **en ce que** le procédé comporte en outre l'application d'une pondération à la quantification des mesures directionnelles d'intensité sonore, de façon proportionnelle au critère de planéarité $c_{op}$ pour chaque mesure à quantifier.

14. Procédé selon l'une des revendications 11 à 13, prise en combinaison avec la revendication 5, **caractérisé en ce que** l'estimation de la direction d'arrivée du son est affinée à partir de la coordonnée du pic local relevé dans la première base définissant des valeurs d'angle d'azimut.

15. Procédé selon l'une des revendications précédentes, **caractérisé en ce qu'**il comporte en outre l'application d'un filtre fréquentiel passe-bas à la projection de la carte d'activité acoustique.

16. Dispositif comportant une interface d'entrée pour recevoir des signaux captés par des microphones de positions prédéterminées, une unité de traitement pour la mise en oeuvre du procédé selon l'une des revendications 1 à 15, et une interface de sortie pour délivrer au moins un signal de détection de source.

17. Programme informatique comprenant des instructions qui conduisent l'appareil selon la revendication 16 à exécuter les étapes de la méthode selon l'une des revendications 1 à 15.

**Patentansprüche**

1. Verfahren zur Verarbeitung von akustischen Signalen zur Detektion einer oder mehrerer Schallquellen in einer Schallumgebung, wobei das Verfahren Folgendes beinhaltet:

   - Erhalten einer Vielzahl (D) von für die Schallumgebung repräsentativen Signalen, die durch eine Vielzahl von Mikrofonen mit vordefinierten Positionen erfasst werden,
   - anhand der durch die Mikrofone erfassten Signale und der Positionen der Mikrofone, Anwenden einer Quantifizierung von richtungsabhängigen Schallintensitätsmessungen und Erstellen einer entsprechenden Karte akustischer Aktivität in einem Raum zur Ortung der Schallquellen, wobei der Raum eine Dimension N aufweist,

   **dadurch gekennzeichnet, dass** das Verfahren ferner Folgendes umfasst:

   - Konstruieren mindestens einer vektoriellen Basis mit einer Dimension kleiner N,
   - Projizieren der Karte akustischer Aktivität gemäß mindestens einer Achse der vektoriellen Basis und

- Suchen nach mindestens einer lokalen Spitze akustischer Aktivität in der Projektion der Karte, wobei eine identifizierte lokale Spitze dem Vorhandensein einer Schallquelle in der Umgebung entspricht.

2. Verfahren nach Anspruch 1, **dadurch gekennzeichnet, dass** die Signale in sukzessiven Rahmen mit einer Dauer, die jeweils einem vorbestimmten Beobachtungszeitraum entspricht, erhalten werden und dass die Erstellung der Karte akustischer Aktivität Folgendes umfasst:

   - Zusammenfassen von Indizes mehrerer aufeinanderfolgender Rahmen und
   - Quantifizieren der Indizes auf einem Gitter des Raums mit Dimension N.

3. Verfahren nach Anspruch 2, **dadurch gekennzeichnet, dass** die Beobachtungsdauer zwischen 10 und 50 ms beträgt.

4. Verfahren nach einem der vorhergehenden Ansprüche, **dadurch gekennzeichnet, dass** das Suchen nach einer lokalen Spitze akustischer Aktivität in der Projektion der Karte Folgendes umfasst:

   - Verarbeiten der Projektion der Karte durch eine Clustering-Technik und
   - Identifizieren von Cluster-Zentren als Positionen von Quellen.

5. Verfahren nach einem der vorhergehenden Ansprüche, **dadurch gekennzeichnet, dass** es ferner Folgendes umfasst:

   - anhand mindestens einer Koordinate der lokalen Spitze, Schätzen, in der vektoriellen Basis, mindestens einer ersten Einfallsrichtung des Klangs, der von der Schallquelle stammt, die der lokalen Spitze entspricht.

6. Verfahren nach Anspruch 5, **dadurch gekennzeichnet, dass** es ferner Folgendes umfasst:

   - anhand der Koordinate der lokalen Spitze in der vektoriellen Basis, Verfeinern der Schätzung der Einfallsrichtung des Klangs, indem die Karte akustischer Aktivität in nur einem Sektor des Raums mit Dimension N verarbeitet wird, welcher die erste Einfallsrichtung umfasst.

7. Verfahren nach einem der vorhergehenden Ansprüche, **dadurch gekennzeichnet, dass** es das Anwenden einer Zerlegung in Frequenzteilbänder auf die durch die Mikrofone erfassten Signale umfasst.

8. Verfahren nach einem der vorhergehenden Ansprüche, **dadurch gekennzeichnet, dass** das Verfahren ferner das Anwenden einer Gewichtung auf die Quantifizierung der richtungsabhängigen Schallintensitätsmessungen proportional zu einer akustischen Energie, die für jede zu quantifizierende Messung geschätzt wird, umfasst.

9. Verfahren nach Anspruch 8 in Kombination mit Anspruch 2, **dadurch gekennzeichnet, dass** eine akustische Energie pro Rahmen geschätzt wird und dass eine Gewichtung mit einem höheren Gewicht auf die Quantifizierung derjenigen richtungsabhängigen Schallintensitätsmessungen angewendet wird, die aus den Rahmen stammen, die die größte Energie aufweisen.

10. Verfahren nach Anspruch 8 in Kombination mit Anspruch 7, **dadurch gekennzeichnet, dass** eine Energie pro Teilband geschätzt wird, um Teilbänder, die die größte akustische Energie aufweisen, zu identifizieren, und dass eine Gewichtung mit einem höheren Gewicht auf die Quantifizierung derjenigen richtungsabhängigen Schallintensitätsmessungen angewendet wird, die in den Teilbändern, die die größte Energie aufweisen, eine größere Repräsentanz aufweisen.

11. Verfahren nach einem der vorhergehenden Ansprüche, **dadurch gekennzeichnet, dass** die Mikrofone dazu eingerichtet sind, Schallsignale zu erfassen, die in einer Basis von Kugelflächenfunktionen mit Ambisonics-Darstellung definiert sind, und dass mindestens eine vektorielle Basis mit Dimension eins konstruiert wird, aus:

   - einer ersten Basis, die Azimutwinkelwerte einer Einfallsrichtung des Klangs definiert und eine Azimutwinkelachse umfasst, auf die die Karte akustischer Aktivität projiziert wird, und
   - einer zweiten Basis, die Elevationswinkelwerte einer Einfallsrichtung des Klangs definiert und eine Elevationswinkelachse umfasst, auf die die Karte akustischer Aktivität projiziert wird.

**12.** Verfahren nach Anspruch 11, **dadurch gekennzeichnet, dass** die Ambisonics-Darstellung mindestens die Ordnung eins umfasst und dass die Azimut- und Elevationswinkel in Abhängigkeit von den vier Ambisoncis-Komponenten 1. Ordnung, die als W, X, Y, Z bezeichnet werden, jeweils wie folgt definiert werden:

$$\begin{cases} \theta = arctan\left(\dfrac{f(WY^*)}{f(WX^*)}\right) \\ \varphi = arctan\left(\dfrac{g(WZ^*)}{\sqrt[2]{\|g(WX^*)\|^2 + \|g(WY^*)\|^2}}\right) \end{cases}$$

wobei *f* und g mögliche Funktionen von Folgendem sind: Identität, Erwartungswert, Realteil einer komplexen Größe oder einer Kombination aller oder eines Teils dieser Funktionen.

**13.** Verfahren nach Anspruch 12, **dadurch gekennzeichnet, dass** ein Planaritätskriterium einer Schallwelle, die aus einer Quelle stammt, in Abhängigkeit von den Ambisonics-Komponenten X, Y, Z et W geschätzt wird:

$$c_{op} = \frac{f(\|X\|^2) + f(\|Y\|^2) + f(\|Z\|^2)}{3f(\|W\|^2)}$$

und dass das Verfahren ferner das Anwenden einer Gewichtung auf die Quantifizierung der richtungsabhängigen Schallintensitätsmessungen proportional zu dem Planaritätskriterium $c_{op}$ für jede zu quantifizierende Messung umfasst.

**14.** Verfahren nach einem der Ansprüche 11 bis 13 in Kombination mit Anspruch 5, **dadurch gekennzeichnet, dass** das Schätzen der Einfallsrichtung des Klangs anhand der Koordinate der lokalen Spitze verfeinert wird, die der ersten Basis, die Azimutwinkelwerte definiert, entnommen wird.

**15.** Verfahren nach einem der vorhergehenden Ansprüche, **dadurch gekennzeichnet, dass** es ferner das Anwenden eines Tiefpass-Frequenzfilters auf die Projektion der Karte akustischer Aktivität umfasst.

**16.** Vorrichtung, die eine Eingangsschnittstelle zum Empfangen von Signalen, die von Mikrofonen mit vorbestimmten Positionen erfasst werden, eine Verarbeitungseinheit zur Umsetzung des Verfahrens nach einem der Ansprüche 1 bis 15 und eine Ausgangsschnittstelle zum Übermitteln mindestens eines Quellendetektionssignals umfasst.

**17.** Computerprogramm, das Anweisungen beinhaltet, die die Einrichtung nach Anspruch 16 dazu veranlassen, die Schritte der Methode nach einem der Ansprüche 1 bis 15 auszuführen.

**Claims**

**1.** Method for processing acoustic signals in order to detect one or more sound sources in a sound scene, the method comprising:

- obtaining a plurality (D) of signals which are representative of the sound scene, captured by a plurality of microphones with predefined positions,
- on the basis of the signals captured by the microphones and of the positions of the microphones, applying a quantification of directional measurements of sound intensity and establishing a corresponding map of acoustic activity in a space in which the sound sources are located, said space being of size N,

**characterized in that** the method further comprises:

- constructing at least one vector basis of a size smaller than N,
- projecting the map of acoustic activity along at least one axis of the vector basis, and
- searching for at least one local peak of acoustic activity in the projection of the map, an identified local peak corresponding to the presence of a sound source in the scene.

**2.** Method according to Claim 1, **characterized in that** the signals are obtained over successive frames of durations each corresponding to a predetermined observation period, and **in that** establishing the map of acoustic activity comprises:

- collecting indexes of several consecutive frames, and
- quantifying said indexes on a grid of the space of size N.

**3.** Method according to Claim 2, **characterized in that** the observation duration is between 10 and 50 ms.

**4.** Method according to one of the preceding claims, **characterized in that** searching for a local peak of acoustic activity in the projection of the map comprises:

- processing the projection of the map by means of a clustering technique, and
- identifying centres of clusters as positions of sources.

**5.** Method according to one of the preceding claims, **characterized in that** it further comprises:

- on the basis of at least one coordinate of the local peak, estimating, in the vector basis, at least one first direction of arrival of the sound originating from the sound source corresponding to the local peak.

**6.** Method according to Claim 5, **characterized in that** it further comprises:

- on the basis of the coordinate of the local peak in the vector basis, refining the estimate of the direction of arrival of the sound by processing the map of acoustic activity in one sector only of the space of size N, including said first direction of arrival.

**7.** Method according to one of the preceding claims, **characterized in that** it comprises applying a decomposition into frequency sub-bands to the signals captured by the microphones.

**8.** Method according to one of the preceding claims, **characterized in that** the method further comprises applying a weighting to the quantification of the directional measurements of sound intensity, in proportion to an acoustic energy estimated for each measurement to be quantified.

**9.** Method according to Claim 8, in combination with Claim 2, **characterized in that** an acoustic energy is estimated for each frame and **in that** a weighting with a higher weight is applied to the quantification of the directional measurements of sound intensity originating from the frames having the most energy.

**10.** Method according to Claim 8, in combination with Claim 7, **characterized in that** an energy is estimated for each sub-band in order to identify sub-bands having the most acoustic energy and **in that** a weighting with a higher weight is applied to the quantification of the directional measurements of sound intensity which are more represented in said sub-bands having the most energy.

**11.** Method according to one of the preceding claims, **characterized in that** the microphones are arranged to capture sound signals defined in a basis of spherical harmonics in an ambisonic representation, and **in that** at least one vector basis of size one is constructed, from among:

- a first basis defining azimuth angle values of the direction of arrival of the sound, and comprising an axis of azimuth angles onto which the map of acoustic activity is projected, and
- a second basis defining elevation angle values of the direction of arrival of the sound, and comprising an axis of elevation angles onto which the map of acoustic activity is projected.

**12.** Method according to Claim 11, **characterized in that** the ambisonic representation is of at least first-order, and **in that** the azimuth and elevation angles are defined as a function of the four 1st-order ambisonic components, labelled W, X, Y and Z, respectively, as follows:

$$\begin{cases} \theta = \arctan\left(\dfrac{f(WY^*)}{f(WX^*)}\right) \\ \varphi = \arctan\left(\dfrac{g(WZ^*)}{\sqrt[2]{\|g(WX^*)\|^2 + \|g(WY^*)\|^2}}\right) \end{cases}$$

f and g being possible functions from among identity, statistical expectation, the real part of a complex quantity, or a combination of all or some of these functions.

13. Method according to Claim 12, **characterized in that** a criterion of planarity of a sound wave originating from a source is estimated as a function of the ambisonic components X, Y, Z and W:

$$c_{op} = \frac{f(\|X\|^2) + f(\|Y\|^2) + f(\|Z\|^2)}{3f(\|W\|^2)}$$

and **in that** the method further comprises applying a weighting to the quantification of the directional measurements of sound intensity, in proportion to the criterion of planarity $c_{op}$ for each measurement to be quantified.

14. Method according to one of Claims 11 to 13, in combination with Claim 5, **characterized in that** the estimate of the direction of arrival of the sound is refined on the basis of the coordinate of the local peak picked up in the first basis defining azimuth angle values.

15. Method according to one of the preceding claims, **characterized in that** it further comprises applying a low-pass frequency filter to the projection of the map of acoustic activity.

16. Device comprising an input interface for receiving signals captured by microphones with predetermined positions, a processing unit for implementing the method according to one of Claims 1 to 15, and an output interface for delivering at least one source detection signal.

17. Computer program comprising instructions which cause the apparatus according to Claim 16 to execute the steps of the method according to one of Claims 1 to 15.

FIG. 1

FIG. 2

**FIG. 3**

FIG. 4

```
        ┌──────────────┐    S0
        │   ACQ  ANT   │───
        └──────────────┘
               │
               ▼
        ┌──────────────┐    S1
        │   X, Y, Z, W │───
        └──────────────┘
               │
               ▼
        ┌──────────────┐    S2
        │      FFT     │───
        └──────────────┘
               │
               ▼
        ┌──────────────┐    S3
        │     θ, φ     │───
        └──────────────┘
               │
               ▼
     ┌──────────────────┐   S4
     │ POND / temp-Freq │───
     └──────────────────┘
               │
               ▼
        ┌──────────────┐    S5
        │   POND Cop   │───
        └──────────────┘
               │
               ▼
     ┌──────────────────┐   S6
     │  Esp. ──▶ cluster│───
     └──────────────────┘
               │
               ▼
      ╱─────────────────╲   S7
     ⟨        p K        ⟩──
      ╲─────────────────╱
               │
               ▼
        ┌──────────────┐    S8
        │    DETECT    │───
        └──────────────┘
               │
               ▼
        ┌──────────────┐    S9
        │    POSIT     │───
        └──────────────┘
```

# FIG. 5

ANT

INT

DIS

PROC ⟷ MEM

OUT

# FIG. 6

**EP 3 807 669 B1**

## RÉFÉRENCES CITÉES DANS LA DESCRIPTION

**Documents brevets cités dans la description**

- EP 0795851 A2

- US 2012195436 A1